**Europäisches Patentamt**

**European Patent Office**

**Office européen des brevets**

(11) Publication number : **0 424 596 B1**

(12) **EUROPEAN PATENT SPECIFICATION**

(45) Date of publication of patent specification :
**18.08.93 Bulletin 93/33**

(21) Application number : **89870163.6**

(22) Date of filing : **25.10.89**

(51) Int. Cl.$^5$ : **C05F 3/00**

(54) A method for processing manure and a substance used therewith.

The file contains technical information
submitted after the application was filed and
not included in this specification

(43) Date of publication of application :
**02.05.91 Bulletin 91/18**

(45) Publication of the grant of the patent :
**18.08.93 Bulletin 93/33**

(84) Designated Contracting States :
**AT BE CH DE ES FR GB IT LI LU NL**

(56) References cited :
**EP-A- 0 055 493**
**CH-A- 311 225**
**DE-A- 2 900 641**
**DE-C- 308 658**
**GB-A- 1 576 423**

(56) References cited :
**CHEMICAL ABSTRACTS, vol. 87, no. 13, 26
September 1977 Columbus, Ohio, USA, p. 527,
no. 101123u L.M.J. VERSTRAETEN et.al.:
"Effect of Formaldeheyde on Nitrogen
Mineralization in Soils" Agricultura (Louvain)
1976, 24(4), 337-46**

(73) Proprietor : **AEGTEN
Peerderbaan 70
B-3578 Meeuwen (BE)**

(72) Inventor : **Aegten, Jaak
Peerderbaan 60
B-3578 Meeuwen (BE)**
Inventor : **Martens, Jos
Achterstraat 41
B-3573 Wijchmaal (BE)**
Inventor : **Bomans, Hilde
Middenweg 10
B-3538 Houthalen-Helchteren (BE)**

(74) Representative : **Callewaert, Jean et al
Bureau Gevers S.A. rue de Livourne 7 bte 1
B-1050 Bruxelles (BE)**

## Description

The present invention relates to a method for processing manure, in particular for reducing nitrogen losses from said manure at least after spreading the latter on a field, wherein formaldehyde is added to said manure.

Such a method is known from the report entitled "Omvorming van mengmest tot een reukloze volwaardige meststof" of J. Delvaux published by the Catholic University of Leuven and relating to experiments carried out in 1984-1985 at the University of Leuven. Moreover, according to page 7 of this report, Blanck and Gerlach taught already in 1918 and 1919 respectively, to add formalin to liquid manure in order to reduce nitrogen losses from the liquid manure.

The above mentioned experiments of J. Delvaux prove that it is possible to reduce the ammonia volatilization from semi-liquid manure considerably by adding formaldehyde to the manure. However, from his experiments, J. Delvaux concluded that adding formaldehyde as such to manure is not an economically feasible method for reducing ammonia volatilization in agriculture due to the large amounts of formaldehyde which are required for obtaining the desired reduction. For example on page 17 of his report there is mentioned that for fresh semi-liquid manure at least 2 % formalin (31.5 % formaldehyde) and for fermented semi-liquid manure even more than 4 % formalin are required for obtaining longer lasting effects on the ammonia volatilization.

Adding formaldehyde to manure is further disclosed in DE-A-2900641, more particularly for sterilizing and stabilizing this manure. In this known method, formaldehyde is added until no foam is produced anymore.

Further, also GB-A-1576423 discloses to add formaldehyde to manure in order to sterilize it. The minimum amount of formalin to be used comprises 2 %. After the addition of formalin, the sterilized manure is processed further to a dry product.

Ammonia volatilisation from manure is an important problem in agriculture since it is, on the one hand, an important cause of acid rain and causes, on the other hand, a considerable reduction of the manurial value. For example in semi-liquid manure usually more than 50 % of the total amount of nitrogen is formed by ammoniacal nitrogen. A large part of this ammoniacal nitrogen will volatilize as ammonia during and after the spreading of the manure on the field.

An object of the present invention is therefore to provide a method for reducing the nitrogen volatilization from manure, which is economically feasible and hence does not require such a large amount of formaldehyde.

To this end, calcium chloride and magnesium chloride are added to said manure in combination with said formaldehyde.

The combination of calcium chloride and magnesium chloride with formaldehyde according to the present invention results in a practical method for reducing nitrogen losses from manure. Indeed, it has been found that by adding calcium chloride in combination with formaldehyde to the manure, said calcium chloride is not only valuable as fertilizer but reduces by its presence in the manure the amount of formaldehyde required for obtaining a predetermined reduction of the ammonia volatilization. The same has been found surprisingly for the fertilizer magnesium chloride, although DE-C-308 658 teaches that magnesium chloride, in contrast with calcium chloride, would not have any effects on the ammonia volatilization.

The use of calcium chloride as such for reducing ammonia volatilization is known per se from DE-C-308 658 (1917). According to this patent, large amounts of calcium chloride, i.e. about 25 kg per 1000 l liquid manure, have to be added in order to reduce the ammonia volatilization.

The use of calcium chloride as such, in particular for reducing ammonia volatilization from liquid manure during its storage, is further known per se from CH-A-311 225. In this patent, it is suggested to use 0,5 moles $Ca^{2+}$-ions per litre manure.

EP-A-0 055 493 discloses also magnesium salts, including magnesium chloride, for reducing the ammonia volatilization. EP-A-0 055 493 relates to a method for reducing ammonia volatilization from urea-containing synthetic fertilizers present on or at a soil surface. The urea from this fertilizer is converted after about 24 to 48 hours in the soil into $(NH_4)CO_3$. The above mentioned salts are used in order to modify the soil conditions and in particular the soil pH in order to control the ammonia volatilization after the urea is converted in the soil into $(NH_4)_2CO_3$.

The effect of formaldehyde in nitrogen mineralization in soils is a discloses by L. Verstraeten in Chemical Abstracts, Vol. 87, n° 13, September 26, 1977, n°101123u. He found for example that, under aerobic conditions, 140 ppm formaldehyde completely stopped nitrification in the soil.

According to the present invention, it was moreover found that the combined use of calcium chloride, magnesium chloride and formaldehyde involves synergic effects. In this way, smaller amounts of these substances are required in order to obtain the desired effect on the ammonia volatilization.

Due to a better control of the nitrogen fertilization by the manure, the nitrogen concentration in the soil can be much more precisely determined whereby nitrogen top dressing by means of artificial nitrogenous fertilizers can be prevented. Such excessive additions of nitrogen are an important cause of nitrate pollution of

EP 0 424 596 B1

the ground water. A further advantage of formaldehyde dosages consists in that formaldehyde reduces the bad smell of semi-liquid manure.

The essential feature of the invention are the subject-matter of independant claims 1 and 13.

In a typical embodiment of the method according to the invention said formaldehyde and said calcium chloride and magnesium chloride are added to the manure by adding a first amount of a substance which comprises a second amount of said formaldehyde and a further amount of said calcium and magnesium chloride.

In a preferred embodiment of a method according to the invention, said method comprises the following steps :

- determining a nitrogen parameter for the manure to be processed, which parameter is an indication for the ammoniacal nitrogen content of the manure ;
- determining, on the basis of said nitrogen parameter, a minimum amount of substance which has to be added per unit of volume to said manure in order to obtain a predetermined reduction of the nitrogen losses ; and
- determining said first amount on the basis of said minimum amount of substance.

By nitrogen losses is meant here, the nitrogen disappearing from the manure or form the soil before the growing season of the crops. Said nitrogen losses thus comprise ammonia volatilization as well as nitrate leaching.

The determination of the nitrogen parameter can be realized on the basis of manure analyses, tables or particulars concerning the circumstances of the manure production.

In order to achieve the predetermined reduction in terms of percentage, it is generally required to add more substance to the manure as the latter contains more nitrogen.

In a further preferred embodiment of a method according to the invention, said method comprises the following steps :

- determining, for said field and for a crop to be grown on said field, on the basis of a predetermined fertilizer criterion, a first calcium, respectively magnesium, parameter, indicating an amount of calcium, respectively magnesium, which has to be applied to said field in order to meet said fertilizer criterion ;
- determining a number of manure volume units which will be applied per surface unit ;
- determining a second calcium, respectively magnesium, parameter on the basis of at least said first parameter and said number of volume units, said second parameter indicating an amount of calcium, respectively magnesium, which has to be added per manure volume unit in order to meet said fertilizer criterion ;
- determining a third calcium, respectively magnesium, parameter which indicates the amount of calcium, respectively magnesium, per volume unit of said substance ;
- determining, on the basis of said second and said third calcium parameter, respectively said second and said third magnesium parameter, a third, respectively fourth amount of substance to be added per manure volume unit ;
- selecting the smallest quantity between said third and fourth amount ; and
- determining said first amount of substance on the basis of at least said smallest quantity.

The chosen fertilizer criterion can be a fertilizer recommendation set up on the basis of soil analysis, as well as the professional experience of for example the farmer. The addition of an amount of $CaCl_2$ and $MgCl_2$, corresponding to the chosen fertilizer criterion, together with the manure, results in a calcium and magnesium fertilization and at the same time in a reduction of the nitrogen losses whether or not larger than the predetermined reduction.

Preferably, said second amount of formaldehyde is adjusted on the basis of the difference between said minimum amount of substance and said smallest quantity of substance.

More in particular, said second amount of formaldehyde will be increased by adding formaldehyde if said minimum amount is larger than said smallest amount and, on the other hand, said second amount of formaldehyde will be reduced if said minimum amount is smaller than said smallest quantity.

The invention further relates to a substance to be used in a method according to the invention for processing manure which substance is characterized in that it comprises calcium chloride, magnesium chloride and formaldehyde.

Further details and advantages of the invention will become clear from the following description of a method and a substance according to the invention this description is given only by way of non-limitative exemple with reference to the drawings wherein :

Figure 1 shows a schematical view of an experimental set-up for measuring the ammonia volatilization ;

Figure 2 is a graph illustrating the effect of calcium chloride and magnesium chloride on the ammonia volatilization from semi-liquid cow manure ;

Figure 3 is a graph of the speed of ammonia volatilization from a field manured, on the one hand, with

3

processed and, on the other hand, with non-processed semi-liquid cow manure ;

Figure 4 is a graph wherein the results of Figure 3 are cumulatively represented ;

Figure 5 is a graph of a reduction of the ammonia volatilization from semi-liquid cow manure as a function of the added amount of a substance according to the invention.

The invention has to be situated within the scope of the general problems posed with respect to the manuring with liquid, semi-liquid, dried or farmyard manure and especially with semi-liquid cow, pig or chicken manure. Usually, the manure is spread over a field or a pasture by using for example a manure spreader such as a manure tank. During and after this spreading, a large part of the ammoniacal nitrogen of the manure escapes as ammonia into the free atmosphere. Hot and windy weather and a high soil pH lead to an increase of this ammonia volatilization. An adverse effect of the ammonia volatilization consists in that the nitrogen escaped with the ammonia cannot be taken up by the crop so that the manurial value is reduced. There is also generally accepted that the escaped ammonia is transformed in the atmosphere into all kinds of nitrogen compounds which contribute to the formation of acid rain. As well from an economic as from an environmental point of view, it is thus important to reduce the nitrogen losses from manure by ammonia volatilization as well during as after the spreading on the field.

Another aspect of the problems related to the spreading of manure is formed by nitrate leaching forming a second cause of nitrogen losses. By nitrate leaching there is meant here the migration of nitrates present in the soil towards deeper ground layers as a result of downward water flows. Due to the strongly increased manuring with organic manure as well as with artificial fertilizers, the nitrates seeping through the soil constitute an important cause of ground water pollution. The nitrate leaching causes further a reduction of the manurial value of the manure since the leached nitrates are not anymore available to the crop.

Due to the anaerobic condition and the high ammonia content of the bulk manure stored on the farm, this stored manure comprises substantially no nitrates but on the contrary a large amount of ammoniacal nitrogen. However, after the spreading on the field, for example these ammoniacal nitrogen compounds can be transformed by Nitrosomonas and Nitrobacter into nitrates which are indeed subject to leaching processes. In order to reduce the nitrate leaching, it is appropriate to spread the manure in spring on the field so that the nitrates originating from the manure do not already leach out during the humid winter season.

In the perspective of these general problems, the advantages offered by the method according to the invention will stand out more clearly.

In the method according to the invention $CaCl_2$, $MgCl_2$ and formaldehyde are added to the manure.

There has been determined experimentally that as well an addition of $CaCl_2$ and/or $MgCl_2$ as an addition of formaldehyde causes a reduction of the ammonia volatilization from manure. Hereunder, a series of experiments is given which have been carried out on a semi-liquid cow manure having the characteristics mentioned in Table 1.

## Table 1

| | |
|---|---|
| pH | 6.7 – 7.5 |
| Dry matter | 77 – 85 g/liter |
| Organic matter | 60 – 68 g/liter |
| Total nitrogen (N) | 3.7 – 4.7 g/liter |
| Ammoniacal nitrogen (N) | 1.7 – 2.3 g/liter |
| Phosphorus ($P_2O_5$) | 1.4 – 1.8 g/liter |
| Potassium ($K_2O$) | 4 – 4.5 g/liter |
| Calcium (CaO) | 0.9 – 1.2 g/liter |
| Magnesium (MgO) | 0.8 – 1.1 g/liter |
| Sodium ($Na_2O$) | 0.7 – 0.9 g/liter |

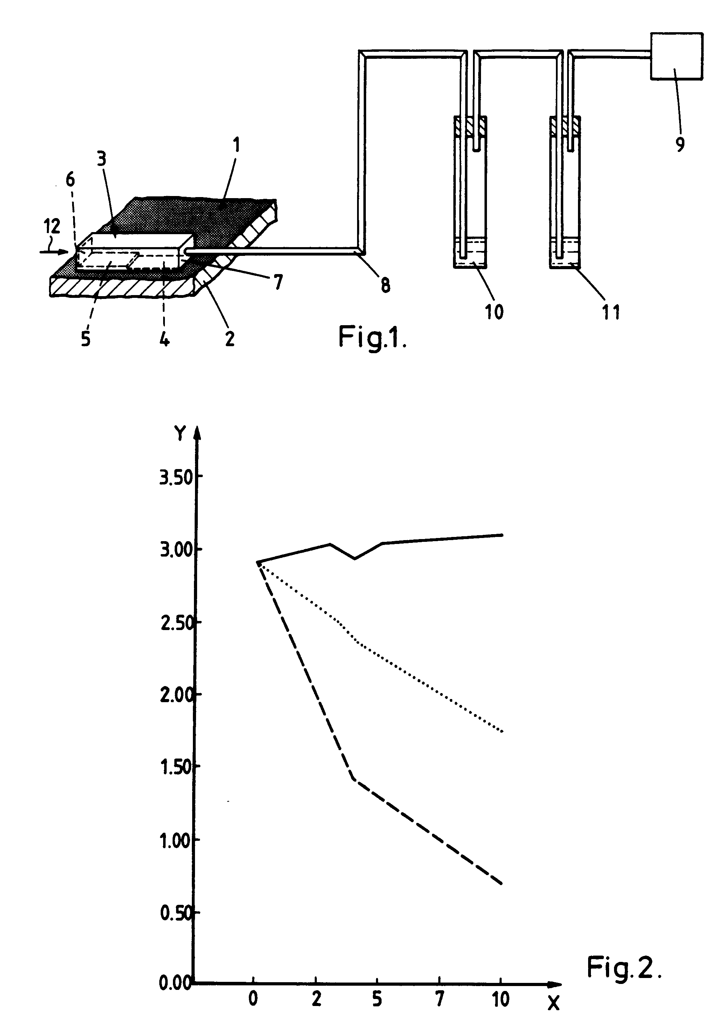

These experiments have been carried out with an experimental set-up as shown in Figure 1. The semi-liquid cow manure 1 has been spreaded, on the one hand, over a layer of sandy soil 2 having a thickness of 2 cm (experiments 1 and 2) and, on the other hand, over a field (experiments 3, 4 and 5). About 5 liter semi-liquid manure have been spread per square meter corresponding to 125 ml manure per 250 $cm^2$. Three rectangular small boxes 3, only one of which being shown in Figure 1, have been put on this manured soil layer.

One half 4 of the bottom of the boxes 3, having for example about a 250 cm² surface, is open whereas the other half 5 is airtight. Also the extremity 6 of the box 3, situated on the tight bottom half side is open. On the other closed extremity 7 of the box 3, a suction line 8 is connected, through which air is sucked by means of a vacuum cleaner 9 at a flow rate of for example 2.1 liter per minute. In order to be able to determine the ammonia volatilization through the open bottom half 4, two test tubes 10, 11 are disposed in series in the suction line 8. Both test tubes 10, 11 are for example partly filled with 40 ml of a 2 % boric acid solution.

The air sucked in the box 3, by means of the vacuum cleaner 9, according to arrow 12, contains substantially all the ammonia volatilized through the open bottom half 4 or in other words all of the ammonia volatilized on a soil surface of about 250 cm². Subsequently, this air bubbles up through the first 10 and the second test tube 11 whereby substantially all of the ammonia is kept into the boric acid solutions. By titration for example with a 0.01 N sulphuric acid solution, the escaped ammonia can be determined.

Experiment 1

In this experiment, the effect of $CaCl_2$ on the ammonia volatilization under laboratory circumstances has been examined at room temperature.

To this end, 0 ; 3 ; 4 ; 5 and 10 ml of a 33 % by weight $CaCl_2$ solution has been mixed each time with 125 ml of semi-liquid cow manure having the characteristics given in Table 1. The amount of ammonia volatilized during a period of 3 hours and from a 250 cm² surface has been determined by means of the above described experimental set-up. The measurement has been repeated three times. In order to examine the effect of a dilution of the semi-liquid manure, the same experiment has also been carried out with 0 ; 3 ; 4 ; 5 and 10 ml of water added to the manure instead of the $CaCl_2$ solution. The ammonia volatilization measured per 250 cm² has been converted into kilograms volatilized nitrogen (N) per hectare in a well known manner.

In the graph of Figure 2, the number of milliliters added $CaCl_2$ solution or water has been indicated on the X-axis whereas the amount of volatilized nitrogen (kg N/ha) is represented on the Y-axis. The dashed line indicates the effect of $CaCl_2$ dosages whereas the full line indicates the effect of water dosages or in other words the effect of dilutions.

Figure 2 shows clearly that the addition of a $CaCl_2$ solution substantially reduces the ammonia volatilization. Further, the water dosages seem to have substantially no effect on the ammonia volatilization. Consequently, the effect of the addition of a $CaCl_2$ solution is clearly not due to a dilution effect but indeed to the action of $CaCl_2$.

Experiment 2

In order to examine the effect of $MgCl_2$ on the ammonia volatilization, experiment 1 has been repeated. However, in this experiment use is made of a 47 % by weight $MgCl_2$ solution instead of a $CaCl_2$ solution. Further, the water dosages have not been repeated anymore.

The results of this experiment are also shown by the dotted line in Figure 2. With respect to the effect of $MgCl_2$, it seems that $MgCl_2$ causes with respect to $CaCl_2$ a smaller but still a considerable reduction of the ammonia volatilization.

Experiment 3

In this experiment, there has been examined the effect of a substance, comprising 11.8 % by weight $CaCl_2$, 13.2 % by weight $MgCl_2$ and 13.3 % by weight formaldehyde, on the ammonia volatilization from semi-liquid cow manure having the characteristics given in Table 1.

On a sandy soil, a number of test plots have been delimited whereover either an amount of non-processed or processed semi-liquid cow manure has been spread. These amounts corresponded to 50,000 l semi-liquid manure per hectare. The difference between the processed and the non-processed semi-liquid manure consisted in that an amount of the above mentioned substance has been added to the manure in a proportion of 1.2 kg substance per 100 l manure. Each hour after the spreading of the manure, the ammonia volatilization has been measured by means of the above described experimental set-up. To this end, the boric acid solutions of the test tubes havebeen replaced every hour and afterwards titrated with sulphuric acid. The obtained results have been further converted into kilogram volatilized nitrogen (N) per hectare in a well known manner.

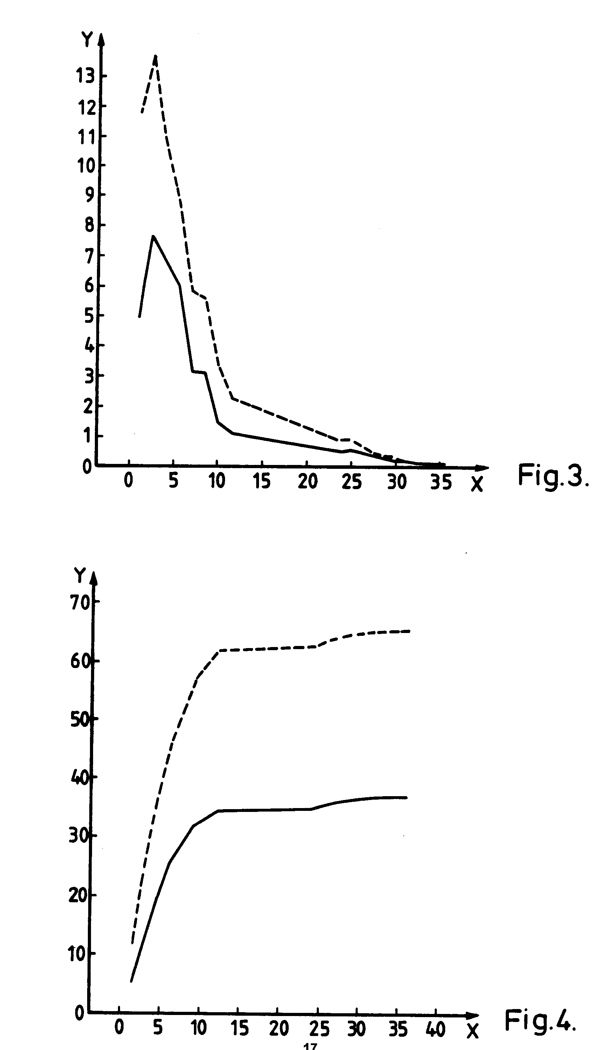

The nitrogen volatilization speed has been represented graphically in Figure 3. The X-axis of this graph indicates the number of hours after the manuring of the test plots whereas the Y-axis indicates the amount of nitrogen volatilized per hour and per hectare and expressed in kg N/ha.hour. The results for the processed semi-liquid manure are shown by the full line whereas the results for the non-processed semi-liquid manure are shown in dashed line.

A first important fact which can be derived from this graph, is that said substance reduces considerably the nitrogen volatilization speed. Furthermore, it is also important that this nitrogen volatilization speed reaches after about 2 days substantially zero and this as well for the processed as for the non-processed semi-liquid manure. Consequently, an extra amount of nitrogen is kept into the soil by using the processed manure, which is not the case when using the non-processed semi-liquid manure.

In order to quantify the gain of nitrogen in the soil more accurately, the results of this experiment have also been represented in Figure 4 by means of a cumulative graph. The X-axis indicates again the number of hours after the manuring whereas the Y-axis indicates here the total amount of volatilized nitrogen expressed in kg N/ha. Also in this Figure 4, the results for the processed manure have been represented by the full line and the result for the non-processed manure by the dashed line.

Figure 4 shows that the total amount of volatilized nitrogen reaches substantially a maximum after a relatively short period. For the non-processed semi-liquid manure, this maximum equals about 65 kg N/ha and for the processed semi-liquid manure about 37 kg N/ha. By addition of said substance, the losses of nitrogen by ammonia volatilization have been consequently reduced by approximately 44 %.

Experiment 4

Experiment 3 has been repeated in this case however by using semi-liquid chicken manure. In this experiment, a reduction of the ammonia volatilization with about 41 % has been obtained. This reduction is smaller than the reduction obtained in experiment 3 carried out on semi-liquid cow manure. Since semi-liquid chicken manure contains more ammoniacal nitrogen than semi-liquid cow manure, these results seem to indicate a negative correlation between the ammoniacal nitrogen content of the manure and the efficiency of the added substance. However, due to the higher nitrogen content of the semi-liquid chicken manure an absolute reduction of the ammonia volatilization of about 35 kg N/ha has been determined which reduction is thus larger than the absolute reduction for semi-liquid cow manure.

Experiment 5

In this experiment, the effect of an increasing amount of a substance, containing, just like in experiment 3, 11.8 % by weight $CaCl_2$ ; 13.2 % by weight $MgCl_2$ and 13.3 % by weight formaldehyde, on the ammonia volatilization from semi-liquid cow manure, having also the characteristics given in Table 1, has been examined.

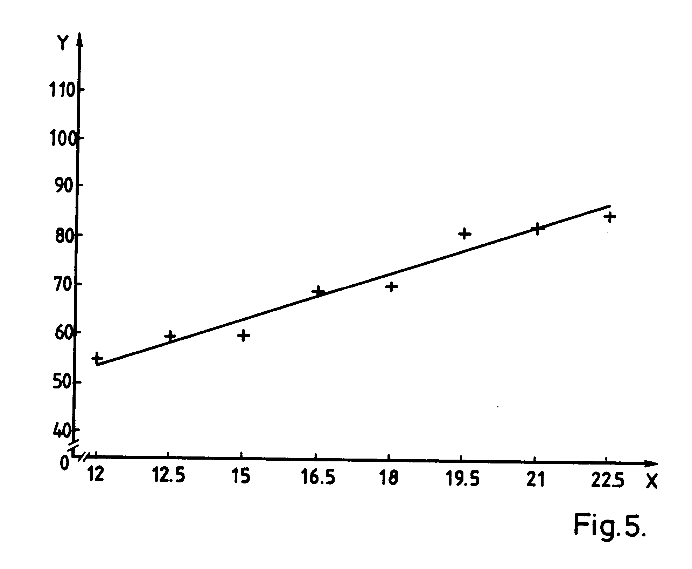

On a sandy soil, a number of test plots have been delimited and manured either with an amount of non-processed or with an amount of processed semi-liquid manure. These amounts corresponded with 50,000 l semi-liquid manure per hectare. As processed manure, use has been made of semi-liquid cow manure on which 12 ; 13.5 ; 15 ; 16.5 ; 18 ; 19.5 ; 21 or 22.5 kg of said substance has been added per 1,000 l manure. Each differently processed or not processed manure has been spread over four test plots. For each of the manured test plots, the ammonia volatilization in this case after a period of two hours, has been determined by means of the above described experimental set-up. More particularly, the test tubes containing the boric acid solution has been removed after two hours and afterwards titrated with sulphuric acid. Subsequently, the procentual reduction of the ammonia volatilization with respect to the ammonia volatilization from the soil manured with non-processed manure has been calculated for example as shown in experiment 3. The obtained results are indicated in the graph of Figure 5 by means of small crosses. The X-axis of the graph of Figure 5 indicates the number of kilograms substance added per 1000 l semi-liquid manure whereas the procentual reduction of the ammonia volatilization is indicated on the Y-axis.

From Figure 5 it appears clearly that the reduction of the ammonia volatilization increases in function of the added amount of substance. In order to examine the nature of this increase, a regression analysis has been performed on the obtained results. By this regression analysis it has been proved that there exists a linear relationship between the added amount of substance and the reduction of the ammonia volatilization. The statistically obtained relationship is $Y = 15.2 + 3.2 X$ wherein Y = procentual reduction of ammonia volatilization and X = amount of added substance in kg substance per 1000 l semi-liquid manure. This linear relationship is shown in Figure 5 by full line.

As already mentioned here-above, the nitrate leaching, apart from the ammonia volatilization, constitutes also an important cause of nitrogen losses from the manure spread over the field. In the method according to the invention, wherein there is also added formaldehyde to the manure, this nitrate leaching is also reduced.

Indeed, the anorganic nitrogen of the original bulk manure stored for example on the farm, is mainly formed by the ammoniacal nitrogen. A part of this ammoniacal nitrogen is bound by formaldehyde and forms hexamethylenetetramine. The other part of this ammoniacal nitrogen is subject to nitrification processes in the soil.

The soil bacteria Nitrosomonas and Nitrobacter are mainly responsible for these processes. Due to the bacteriostatic action of formaldehyde on these micro-organisms, the transformation of ammoniacal nitrogen into nitrate nitrogen is thus hampered. Ammoniacal nitrogen is much strongly bounded to clay and humus particles in the soil than nitrates so that by hampering the nitrate formation, formaldehyde also decreases the nitrate leaching. An additional advantage of the addition of formaldehyde in combination with $CaCl_2$ and $MgCl_2$ is formed by synergetic effects between the action of these chemicals. Indeed, by adding $CaCl_2$ and $MgCl_2$ to the manure, a larger amount of ammoniacal nitrogen in the soil is obtained due to the reduction of the ammonia volatilization. The added formaldehyde not only reduces the ammonia volatilization but also hampers in this case the nitrification of the larger amount of ammoniacal nitrogen in the soil. It will be clear that, due to the action on a larger amount of ammoniacal nitrogen, the efficiency of the formaldehyde dosage has been improved. Also the efficiency of the $CaCl_2$ and $MgCl_2$ dosage is increased by the combination with formaldehyde since a larger portion of the extra amount of nitrogen, prevented from ammonia volatilization, will remain actually into the soil.

After a period of time, more particularly between the moment of manuring and the growing of the crops, the nitrification starts again. The ammoniacal nitrogen bound to the soil particles is then transformed into nitrates available to the crop. Also the ammoniacal nitrogen which has reacted with formaldehyde to form hexamethylene-tetramine is liberated again by the composition of the latter.

During the growing season the crop has usually to be additionally fertilized with an artificial nitrogen fertilizer. Since the manurial value of the manure is better controlled by applying the method according to the invention, said value can also be determined more precisely. The farmer will thus apply less fertilizer to the field resulting thus in a reduced pollution of the ground water.

From the above, a number of advantages of the addition of $CaCl_2$ and $MgCl_2$, in combination with formaldehyde, to the manure have become clear. Preferably, the substance will be added to the manure before spreading it over the field. In this way, the ammonia volatilization will already be reduced at the spreading of the manure. To this end, the substance can already be added to the stored bulk manure either by spreading it over the manure heap or by mixing it into the liquid or semi-liquid manure reservoir by means of an appropriate device. An advantage of this method consists in that in this way, the nitrogen losses during the storage of the manure are also reduced. According to another possible embodiment of the method according to the invention, the substance will be added to the manure just before the spreading over the field, i.e. during the loading of the manure spreader. This last possibility allows, on the one hand, a thorough and homogeneous mixing or spreading of the substance and, on the other hand, an exact dosage of the substance especially in function of the parcel of farm land to be manured.

The following examples will show more in detail some of the different possibilities for determining the amount of substance to be added. According to the particular embodiments of the invention, all kinds of parameters as well of the manure itself as of the field and the crop to be grown thereon can be taken into account.

## Example 1

In this example, the first amount of substance to be added per manure volume unit is mainly determined in function of the kind of manure and in fuction of a predetermined reduction of the nitrogen losses.

The kind of manure is determined on the basis of a nitrogen parameter which is an indication for the ammoniacal nitrogen content of the manure. This nitrogen parameter would be situated for example for semi-liquid cow manure, having the characteristics given in Table 1, between 1.7 and 2.3 g/l. When applying a substance having the same composition as in experiment 3 and when a reduction of the ammonia volatilization by 44 % has been predetermined, then it can be deducted from the efficiency measured in experiment 3, that a minimum amount of 12 kg substance per 1000 l semi-liquid cow manure has to be added in order to obtain the predetermined reduction, and supposing that the application circumstances are substantially the same as in experiment 3.

In order to reach a higher reduction of the ammonia volatilization, it will be necessary to add more than 12 kg substance per 1000 l semi-liquid manure.

## Example 2

In an analogous manner as in example 1 there is determined in this example the minimum amount of substance which is necessary for obtaining a predetermined reduction of the ammonia volatilization by 44 %. Suppose that a substance having also the same composition as in experiments 3, 4 and 5 is applied in this case however to semi-liquid chicken manure coresponding to the manure from experiment 4. This semi-liquid chicken manure has a nitrogen parameter of 5.4 g ammoniacal nitrogen/l while by the addition of 12 kg substance per 1000 l manure only a reduction of the ammonia volatilization by 41 % has been obtained. In order to obtain a reduction of the ammonia volatilization by 44 % there has to be added more than 12 kg substance per 1000 l manure. Based on the linear relationship obtained in experiment 5, the extra amount of substance per 1000 l manure needed for this additional reduction can be determined more accurately by dividing the additional reduction of 3 % by the regression coefficient (= 3.2) of the linear relationship. In this case an extra amount of 0.9 kg (= 3/3.2) or a total amount of 12.9 kg of substance would be necessary for a reduction of the ammonia volatilization by 44 %.

Example 3

In this example use is made of semi-liquid pig manure and even as in examples 1 and 2 there is aimed at a predetermined reduction of the ammonia volatilization by 44 %. In order to determine the minimum amount of substance, having for example the same composition as in experiments 3, 4 and 5, there will be first determined the nitrogen parameter of this pig manure. This nitrogen parameter can for example be determined by carrying out a chemical analysis of the pig manure, by which analysis at least the ammoniacal nitrogen content of the manure is determined. Although this is the most accurate method, it is also possible to obtain a sufficiently accurate value of this content on the basis of tables available in the literature and drawn-up on the basis of several measurements. For example for semi-liquid pig manure an average ammoniacal nitrogen content of 3.3 g N/l is given in the literature. Based on the linear relationship obtained in experiment 5, there can be determined in the same way as in example 2, that in this case an amount of about 12.4 kg substance has to be added to 1000 l pig manure in order to obtain a reduction of the ammonia volatilization by 44 %.

Example 4

In this example there is started from the following situation. A farmer disposes of a field of 1 hectare on which he intends to grow corn. In springtime, he will manure this field with 70 ton semi-liquid cow manure having the characteristics given in Table 1. A fertilizer recommendation from a pedologic service, formulated for this field and for a corn culture, recommends to fertilize approximately 70 kg MgO/ha (magnesium oxide) and approximately 50 kg CaO/ha (calcium oxide). Suppose further that the soil pH was sufficiently high so that it is not appropriate to lime that field. On the contrary, $CaCl_2$ remains suitable as calcium fertilizer. After a conversion on the basis of the molecular weights it is thus recommended to fertilize approximately 166 kg $MgCl_2$ and 99 kg $CaCl_2$ per hectare.

It will be clear that the farmer does not necessarily have to ask for a fertilizer recommendation to a pedologic service but he could as well determine for example by himself, on the basis of his own experience for this corn culture on this field, a first calcium, respectively magnesium parameter. These parameters indicate the amount of calcium and magnesium, for example respectively expressed in kg CaO and kg MgO per hectare, which has to be spreaded over the field in order to meet the fertilizer criterion.

Starting from said first calcium and magnesium parameter, there is then calculated a second calcium and magnesium parameter which indicate the amount of $CaCl_2$ and $MgCl_2$ which has to be added per volume unit of manure in order to meet the fertilizer criterion, in this case for example the fertilizer recommendation of said pedologic service. In the supposition that this manure does substantially not comprise any calcium or magnesium directly available for the crop, said second calcium and magnesium parameter can be calculated by dividing the first calcium and magnesium parameter by the amount of manure to be spreaded over the field. In this case, the second calcium parameter equals 1.41 (= 99/70) kg $CaCl_2$/ton whereas the second magnesium parameter equals 2.37 (+ 166/70) kg $MgCl_2$/ton manure.

Subsequently, a third calcium and a third magnesium parameter have to be determined which parameters indicate the amount of calcium and magnesium, for example expressed as $CaCl_2$ and $MgCl_2$, which is present in the substance according to the invention. In case of a substance having the same composition as the substance used in experiments 3, 4 and 5, these third parameters equal 0.118 kg $CaCl_2$ and 0.132 kg $MgCl_2$ per kg substance respectively.

By dividing each second parameter by its corresponding third parameter, there is obtained with respect to calcium a third and with respect to magnesium a fourth amount of substance to be added per volume unit. In this example, the first amount, i.e. with respect to calcium equals 11.9 (= 1.41/0.118) kg substance per ton manure whereas the fourth amount, i.e. with respect to magnesium, equals 18.0 (= 2.37/0.132) kg substance per ton manure.

The smallest quantity of these two indicates the amount of substance which can be added at the most without exceeding the fertilizer recommendation. Finally, it is up to the farmer to decide whether he will add a larger amount of substance or not. By adding the smallest quantity of substance, i.e. 11.9 kg substance per ton or per 1000 l of semi-liquid cow manure, and under the same circumstances as in experiment 3, the ammonia volatilization will be reduced by approximately 44 %.

Furthermore, the farmer disposes of a number of different possibilities to meet the fertilizer recommendation starting from this situation.

A first possibility consists for example in that he adds 11.9 kg substance per ton semi-liquid cow manure so that the amount of added substance contains already the amount of calcium necessary according to the fertilizer recommendation. In order to realize also a sufficient magnesium fertilization, he will for example fertilize the field additionaly with a magnesium containing fertilizer such as for example kieserite.

A second possibility can consist in that he uses or prepares a substance containing calcium and magnesium in a ratio corresponding substantially to the ratio of these elements according to the fertilizer recommendation. In this example he can add more magnesium chloride to the substance untill the ratio between the calcium and the magnesium content of the substance reaches approximately 0.6 (= 99/166). An advantage of the latter method is that by the addition of an extra amount of $MgCl_2$ to the substance and consequently to the manure, there will be obtained a bigger reduction of the ammonia volatilization. Moreover, in this case a seperate fertilization with for example kieserite is no longer required.

Example 5

This example starts from the same situation as in example 4 with however the only difference that there is supposed that the farmer will manure the field with 35 ton semi-liquid chicken manure instead of with 70 ton semi-liquid cow manure.

In an analogous manner as in example 4, there can also be calculated that, in order to meet the fertilizer recommendation, there has to be added with respect to calcium a third amount of approximately 23.8 kg substance per ton manure and with respect to magnesium a fourth amount of approximately 36.0 kg substance per ton chicken manure. These amounts are twice as much as in example 4 since the amount of chicken manure (35 ton) to be spread in this example comprises half of the amount of cow manure (70 ton) to be spread in example 4.

Just like in example 4, the farmer can add the smallest quantity of these two amounts of substance, i.e. 23,8 kg per ton chicken manure, and fertilize the field additionally with for example kieserite.

Let us suppose now that the farmer wants a reduction of the ammonia volatilization by for example 44 % and that he uses semi-liquid chicken manure having the same composition as in example 2 and applied under the same circumstances. According to example 2, he has to add a minimum amount of substance of approximately 12.9 kg substance per ton semi-liquid chicken manure. However, by adding 23.8 kg substance per ton manure, the reduction of the ammonia volatilization will still be larger. Such a larger reduction is moreover realized by means of major elements elements which are, according to the fertilizer recommendation, already necessary per se for the fertilization of the field.

Just like in example 4, the reduction of the ammonia volatilization can possibly still be increased by choosing or preparing a substance having an appropriate composition so that substantially the complete calcium and magnesium fertilization of the field can be realized by adding said substance to the semi-liquid manure. Also in this case there has to be added $MgCl_2$ to a substance having the composition as in experiments 3, 4 and 5.

Example 6

In this example, there is started from a situation, as in example 5, in which the minimum amount of substance, necessary for obtaining a predetermined reduction of the ammonia volatilization, differs from the smallest of the, on basis of the calcium and magnesium fertilizer criterions determined, third and fourth amount of substance.

In the case of example 5, the minimum amount of substance equals to approximately 12.9 kg substance per ton semi-liquid chicken manure and is consequently smaller than said smallest quantity of substance which equals 23.8 kg substance per ton manure. When there is added in this case 23.8 kg per ton manure, the reduction of the ammonia volatilization will be larger than the predetermined reduction. Consequently, the formaldehyde content of the substance could be lowered and hence also the efficiency of the substance so that more than 12.9 kg substance should have to be added in order to reach the predetermined reduction of the ammonia volatilization.

It will be clear that in the other case, in which the minimum amount of substance which has to be added to reduce the ammonia volatilization to the predetermined extent, is too large, there can be added an extra amount of formaldehyde to the substance. Thereby the efficiency of the substance increases and there is required only a smaller amount of substance to obtain the desired effects. Further it is to be noted that due to the synergism between formaldehyde and $CaCl_2$ and/or $MgCl_2$, the increase in efficiency of the substance will be larger than the additional reduction of the ammonia volatilization caused by the extra amount of formaldehyde. Indeed, this formaldehyde reduces the nitrogen losses by nitrate leaching of the total amount of ammoniacal nitrogen present in the soil.

In the preceeding examples it has been made clear that the composition of the substance can be changed on the basis of the calcium and magnesium requirements of the field and also in function of a predetermined efficiency. A substance which is useful under many different circumstances comprises for example between 7 and 13 % by weight $CaCl_2$, between 11 and 17 % by weight $MgCl_2$ and between 10 and 16 % by weight formaldehyde.

## Claims

1. A method for processing manure, in particular for reducing nitrogen losses from said manure at least after spreading the latter on a field, wherein formaldehyde is added to said manure, characterized in that calcium chloride and magnesium chloride are added to said manure in combination with said formaldehyde.

2. A method according to claim 1, characterized in that said formaldehyde and said calcium and magnesium chloride are added to the manure by adding a first amount of a substance which comprises a second amount of said formaldehyde and a further amount of calcium and magnesium chloride.

3. A method according to claim 2, characterized in that it comprises the following steps :
   - determining a nitrogen parameter for the manure to be processed which parameter is an indication for the ammoniacal nitrogen content of the manure ;
   - determining, on the basis of said nitrogen parameter, a minimum amount of substance which has to be added per unit of volume to said manure in order to obtain a predetermined reduction of the nitrogen losses ; and
   - determining said first amount on the basis of said minimum amount of substance.

4. A method according to claim 3, characterized in that said manure is chemically analysed by determining at least the ammoniacal nitrogen content of said manure.

5. A method according to any one of the claims 2 to 4, characterized in that it comprises the following successive steps :
   - determining, for said field and for a crop to be grown on said field, on the basis of a predetermined fertilizer criterion, a first calcium, respectively magnesium, parameter, indicating an amount of calcium, respectively magnesium, which has to be applied to said field in order to meet said fertilizer criterion ;
   - determining a number of manure volume units which will be applied per surface unit ;
   - determining a second calcium, respectively magnesium, parameter on the basis of at least said first parameter and said number of volume units, said second parameter indicating an amount of calcium, respectively magnesium, which has to be added per manure volume unit in order to meet said fertilizer criterion ;
   - determining a third calcium, respectively magnesium, parameter which indicates the amount of calcium, respectively magnesium, per volume unit of said substance ;
   - determining, on the basis of said second and said third calcium parameter, respectively said second and said third magnesium parameter, a third, respectively fourth amount of substance to be added per manure volume unit ;
   - selecting the smallest quantity between said third and fourth amount ; and
   - determining said first amount of substance on the basis of at least said smallest quantity.

6. A method according to claims 3 and 5, characterized in that said first amount of substance is determined on the basis of said minimum amount of substance as well as on the basis of said smallest quantity of substance.

7. A method according to claim 6, characterized in that said second amount of formaldehyde is adjusted on the basis of the difference between said minimum amount of substance and said smallest quantity of substance.

8. A method according to any one of the claims 2 to 4, characterized in that it comprises the following steps :
   - determining, for said field and for a crop to be grown on said field, on the basis of a predetermined fertilizer criterion, a first calcium, respectively magnesium, parameter, indicating an amount of calcium, respectively magnesium, which has to be applied to said field in order to meet said fertilizer criterion ;
   - determining a number of manure volume units which will be applied per surface unit ;
   - determining a second calcium, respectively magnesium, parameter on the basis of at least said first parameter and said number of volume units, said second parameter indicating an amount of calcium, respectively magnesium, which has to be added per manure volume unit in order to meet said fertilizer criterion ;
   - determining a first ratio between said second calcium and said second magnesium parameter ;
   - determining a third calcium, respectively magnesium, parameter which indicates the calcium, respectively magnesium, amount per said substance volume unit ; and
   - adding calcium chloride or magnesium chloride to said substance in such a manner that the ratio between said third calcium and said second magnesium parameter reaches substantially said first ratio.

9. A method according to claim 8, characterized in that it comprises the following further steps :
   - determining, on the basis of said second and said third calcium or magnesium parameter, a fifth substance amount to be added per manure volume unit ; and
   - determining said first substance amount on the basis of at least said fifth amount.

10. A method according to any one of claims 5 to 9, characterized in that said second calcium and magnesium parameter is determined by dividing said first calcium, respectively magnesium, parameter by said number of volume units.

11. A method according to any one of the claims 1 to 10, characterized in that a tank, in particular a tank for spreading manure on the field, is filled with said manure and said calcium and magnesium chloride is added in combination with said formaldehyde to the manure during the filling of the tank.

12. A method according to any one of the claims 1 to 10, characterized in that said calcium and magnesium chloride is added in combination with said formaldehyde to the manure before spreading the latter on the field, especially by mixing them into the manure in a manure reservoir.

13. A substance to be used in a method for processing manure according to anyone of the claims 1 to 12, characterized in that said substance comprises calcium chloride, magnesium chloride and formaldehyde.

14. A substance according to claim 13, characterized in that said substance is an aqueous solution.

15. A substance according to claim 13 or 14, characterized in that said substance comprises between 7 and 13 % by weight calcium chloride, between 11 and 17 % by weight magnesium chloride and between 10 and 16 % by weight formaldehyde.

## Patentansprüche

1. Verfahren zum Verarbeiten von Dünger, insbesondere zum Vorringern von Stickstoffverlusten aus dem Dünger mindestens nachdem dieser auf einem Feld verteilt wurde, worin Formaldehyd dem Dünger zugegeben wird, dadurch gekennzeichnet, daß Calciumchlorid und Magnesiumchlorid zu dem Dünger in Kombination mit dem Formaldehyd zugegeben werden.

2. Verfahren nach Anspruch 1, **dadurch gekennzeichnet,** daß der Formaldehyd und das Calcium- und Magnesiumchlorid zu dem Dünger zugegeben werden, indem eine erste Menge einer Substanz zugegeben wird, die eine zweite Menge des Formaldehyds und eine weitere Menge Calcium- und Magnesiumchlorid umfaßt.

3. Verfahren nach Anspruch 2, **dadurch gekennzeichnet,** daß es die folgenden Schritte umfaßt:
   - Bestimmen eine Stickstoffparameters für den zu verarbeitenden Dünger, welcher ein Indikator für den ammoniakalischen Stickstoffgehalt des Düngers ist;

- Bestimmen, auf der Grundlage des Stickstoffparameters, einer Substanzmindestmenge, die pro Volumeneinheit zu dem Dünger zugegeben werden muß, um eine vorbestimmte Verringerung der Stickstoffverluste zu erhalten; und
- Bestimmen der ersten Menge auf der Grundlage der Substanzmindestmenge.

4. Verfahren nach Anspruch 3, **dadurch gekennzeichnet,** daß der Dünger chemisch analysiert wird, indem mindestens der ammoniakalische Stickstoffgehalt des Düngers bestimmt wird.

5. Verfahren nach einem der Ansprüche 2 bis 4, **dadurch gekennzeichnet,** daß es die folgenden aufeinanderfolgenden Schritte umfaßt:
- Bestimmen für das Feld und für eine auf diesem Feld wachsende Kultur, auf der Grundlage eines vorbestimmten Düngemittelkriteriums, eines ersten Calcium- bzw. Magnesiumparameters, welcher eine Calcium- bzw. Magnesiummenge angibt, die auf das Feld aufgetragen werden muß, um das Düngemittelkriterium zu erfüllen;
- Bestimmen eine Anzahl von Düngervolumeneinheiten, die pro Flächeneinheit aufgetragen werden;
- Bestimmen eines zweiten Calcium- bzw. Magnesiumparameters auf der Grundlage von mindestens dem ersten Parameter und der Anzahl von Volumeneinheiten, wobei der zweite Parameter eine Calcium- bzw. Magnesiummenge angibt, die pro Düngervolumeneinheit zugegeben werden muß, um das Düngemittelkriterium zu erfüllen;
- Bestimmen eines dritten Calcium- bzw. Magnesiumparameters, welcher die Calcium- bzw. Magnesiummenge pro Volumeneinheit der Substanz angibt;
- Bestimmen auf der Grundlage des zweiten und dritten Calciumparatmeters bzw. des zweiten und der dritten Magnesiumparameters, einer dritten bzw. vierten Substanzmenge, die pro Düngervolumeneinheit zuzugeben ist;
- Auswählen der kleinsten Menge unter der dritten und vierten Menge; und
- Bestimmen der ersten Substanzmenge auf der Grundlage von mindestens der kleinsten Menge.

6. Verfahren nach Anspruch 3 und 5, **dadurch gekennzeichnet,** daß die erste Substanzmenge auf der Grundlage der Substanzmindestmenge ebenso wie auf der Grundlage der kleinsten Substanzmenge bestimmt wird.

7. Verfahren nach Anspruch 6, **dadurch gekennzeichnet,** daß die zweite Formaldehydmenge auf der Grundlage der Differenz zwischen der Substanzmindestmenge und der kleinsten Substanzmenge eingestellt wird.

8. Verfahren nach einem der Ansprüche 2 bis 4, **dadurch gekennzeichnet,** daß es die folgenden Schritte umfaßt:
- Bestimmen, für das Feld und für ein auf diesem Feld wachsende Kultur, auf der Grundlage eines vorbestimmten Düngemittelkriteriums, eines ersten Calcium- bzw. Magnesiumparameters, welcher eine Calcium- bzw. Magnesiummenge angibt, die auf das Feld aufgetragen werden muß, um das Düngemittelkriterium zu erfüllen;
- Bestimmen einer Anzahl von Düngervolumeneinheiten, die pro Flächeneinheit aufgetragen werden;
- Bestimmen eines zweiten Calcium- bzw. Magnesiumparameters auf der Grundlage von mindestens dem ersten Parameter und der Anzahl von Volumeneinheiten, wobei der zweite Parameter eine Calcium- bzw. Magnesiummenge angibt, die pro Düngervolumeneinheit zugegeben werden muß, um das Düngemittelkriterium zu erfüllen;
- Bestimmen eines ersten Verhältnisses zwischen dem zweiten Calcium- und dem zweiten Magnesiumparameter;
- Bestimmen eines dritten Calcium- bzw. Magnesiumparameters, welcher die Calcium- bzw. Magnesiummenge pro Substanzvolumeneinheit angibt; und
- Zugeben von Calciumchlorid oder Magnesiumchlorid zu der Substanz, derart, daß das Verhältnis zwischen dem dritten Calcium- und dem zweiten Magnesiumparameter im wesentlichen das erste Verhältnis erreicht.

9. Verfahren nach Anspruch 8, **dadurch gekennzeichnet,** daß es die folgenden weiteren Schritte umfaßt:
- Bestimmen auf der Grundlage des zweiten und der dritten Calcium- oder Magnesiumparameters, einer fünften Substanzmenge, die pro Düngervolumeneinheit zugegeben werden soll; und
- Bestimmen der ersten Substanzmenge auf der Grundlage von mindestens der fünften Menge.

10. Verfahren nach einem der Ansprüche 5 bis 9, **dadurch gekennzeichnet,** daß der zweite Calcium- und Magnesiumparameter bestimmt wird, indem der erste Calcium- bzw. Magnesiumparameter durch die Anzahl der Volumeneinheiten dividiert wird.

11. Verfahren nach einem der Ansprüche 1 bis 10, **dadurch gekennzeichnet,** daß eine Behälter, insbesondere eine Behälter zum Verteilen von Dünger auf dem Feld, mit dem Dünger gefüllt ist und daß Calcium- und Magnesiumchlorid in Kombination mit dem Formaldehyd dem Dünger während des Befüllens des Behälters zugegeben wird.

12. Verfahren nach einem der Ansprüche 1 bis 10, **dadurch gekennzeichnet,** daß das Calcium- und Magnesiumchlorid in Kombination mit dem Formaldehyd dem Dünger zugegeben wird, bevor dieser auf dem Feld verteilt wird, hauptsächlich, indem sie in einem Düngervorratsbehälter in den Dünger hineingemischt werden.

13. Substanz zur Verwendung in einem Verfahren zum Verarbeiten von Dünger nach einem der Ansprüche 1 bis 12, **dadurch gekennzeichnet,** daß die Substanz Calciumchlorid, Magnesiumchlorid und Formaldehyd umfaßt.

14. Substanz nach Anspruch 13, **dadurch gekennzeichnet,** daß die Substanz eine wäßrige Lösung ist.

15. Substanz nach Anspruch 13 oder 14, **dadurch gekennzeichnet,** daß die Substanz zwischen 7 und 13 Gew.-% Calciumchlorid, zwischen 11 und 17 Gew.-% Magnesiumchlorid und zwischen 10 und 16 Gew.-% Formaldehyd umfaßt.


## Revendications

1. Procédé de traitement de fumier, en particulier pour réduire les pertes d'azote du fumier au moins après l'étalement de celui-ci sur un champ, dans lequel on ajoute du formaldéhyde audit fumier, caractérisé en ce qu'on ajoute du chlorure de calcium et du chlorure de magnésium à ce fumier en combinaison avec le formaldéhyde.

2. Procédé suivant la revendication 1, caractérisé en ce que l'on ajoute le formaldéhyde et le chlorure de calcium et de magnésium au fumier en ajoutant une première quantité d'une substance qui comprend une seconde quantité de ce formaldéhyde et une nouvelle quantité de chlorure de calcium et de magnésium.

3. Procédé suivant la revendication 2, caractérisé en ce qu'il comprend les étapes suivantes :
   - la détermination d'un paramètre d'azote pour le fumier à traiter, lequel paramètre est une indication de la teneur en azote ammoniacal du fumier;
   - la détermination, sur la base du paramètre d'azote précité, d'une quantité minimale de substance qui doit être ajoutée par unité de volume au fumier afin d'obtenir une réduction prédéterminée des pertes d'azote; et
   - la détermination de la première quantité précitée sur la base de cette quantité minimale de substance.

4. Procédé suivant la revendication 3, caractérisé en ce que le fumier est analysé chimiquement en déterminant au moins la teneur en azote ammoniacal dudit fumier.

5. Procédé suivant l'une quelconque des revendications 2 à 4, caractérisé en ce qu'il comprend les étapes successives suivantes :
   - la détermination, pour le champ et pour une récolte à faire croître sur le champ susdit, sur la base d'un critère d'engrais prédéterminé, d'un premier paramètre de calcium, respectivement de magnésium, indiquant une quantité de calcium, respectivement de magnésium, qui doit être appliquée au champ afin de satisfaire au critère d'engrais susmentionné;
   - la détermination d'un nombre d'unités de volume de fumier qui sera appliqué par unité de surface;
   - la détermination d'un second paramètre de calcium, respectivement de magnésium, sur la base d'au moins le premier paramètre et le nombre d'unités de volume précités, ce second paramètre indiquant une quantité de calcium, respectivement de magnésium, qui doit être ajoutée par unité de volume de fumier afin de satisfaire au critère d'engrais susdit;
   - la détermination d'un troisième paramètre de calcium, respectivement de magnésium, qui indique la quantité de calcium, respectivement de magnésium, par unité de volume de la substance susdite;
- la détermination, sur la base du second et du troisième paramètres de calcium précités, respectivement du second et du troisième paramètres de magnésium précités, d'une troisième, respectivement d'une quatrième quantité de substance à ajouter par unité de volume de fumier;
- la sélection de la plus petite quantité entre la troisième et la quatrième quantités précitées; et
- la détermination de la première quantité de substance sur la base d'au moins la plus petite quantité susdite.

6. Procédé suivant l'une ou l'autre des revendications 3 et 5, caractérisé en ce que la première quantité de substance est déterminée sur la base de la quantité minimale de substance ainsi que sur la base de la plus petite quantité de substance susmentionnée.

7. Procédé suivant la revendication 6, caractérisé en ce que la seconde quantité de formaldéhyde est ajustée sur la base de la différence entre la quantité minimale de substance et la plus petite quantité de substance précitées.

8. Procédé suivant l'une quelconque des revendications 2 à 4, caractérisé en ce qu'il comprend les étapes suivantes :
- la détermination, pour le champ ou une récolte à faire croître sur le champ susdit, sur la base d'un critère d'engrais prédéterminé, d'un premier paramètre de calcium, respectivement de magnésium, indiquant une quantité de calcium, respectivement de magnésium, qui doit être appliquée au champ afin de satisfaire au critère d'engrais susdit;
- la détermination d'un nombre d'unités de volume de fumier qui doit être appliqué par unité de surface;
- la détermination d'un second paramètre de calcium, respectivement de magnésium, sur la base d'au moins le premier paramètre et le nombre d'unités de volume précités, ce second paramètre indiquant une quantité de calcium, respectivement de magnésium, qui doit être ajoutée par unité de volume de fumier afin de satisfaire au critère d'engrais précité;
- la détermination d'un premier rapport entre le second paramètre de calcium et le second paramètre de magnésium susdits;
- la détermination d'un troisième paramètre de calcium, respectivement de magnésium, qui indique la quantité de calcium, respectivement de magnésium, pour l'unité de volume de substance précitée; et
- l'addition de chlorure de calcium ou de chlorure de magnésium à ladite substance d'une manière telle que le rapport entre le troisième paramètre de calcium et le second paramètre de magnésium atteigne pratiquement le premier rapport susdit.

9. Procédé suivant la revendication 8, caractérisé en ce qu'il comprend les étapes ultérieures suivantes :
- la détermination, sur la base du second et du troisième paramètres de calcium ou de magnésium, d'une cinquième quantité de substance à ajouter par unité de volume de fumier; et
- la détermination de la première quantité de substance sur la base d'au moins la cinquième quantité susdite.

10. Procédé suivant l'une quelconque des revendications 5 à 9, caractérisé en ce que le second paramètre de calcium et de magnésium est déterminé en divisant le premier paramètre de calcium, respectivement de magnésium, par le nombre d'unités de volume précité.

11. Procédé suivant l'une quelconque des revendications 1 à 10, caractérisé en ce qu'une cuve, en particulier une cuve pour l'étalement de fumier sur le champ, est remplie du fumier précité et le chlorure de calcium et de magnésium est ajouté en combinaison avec le formaldéhyde au fumier au cours du remplissage de la cuve.

12. Procédé suivant l'une quelconque des revendications 1 à 10, caractérisé en ce que le chlorure de calcium et de magnésium est ajouté en combinaison avec le formaldéhyde au fumier avant l'étalement de celui-ci sur le champ, en particulier en les mélangeant au fumier dans un réservoir à fumier.

13. Substance à utiliser dans un procédé de traitement de fumier suivant l'une quelconque des revendications 1 à 12, caractérisée en ce que ladite substance comprend du chlorure de calcium, du chlorure de magnésium et du formaldéhyde.

**14.** Substance suivant la revendication 13, caractérisée en ce que ladite substance est une solution aqueuse.

**15.** Substance suivant l'une ou l'autre des revendications 13 et 14, caractérisée en ce que ladite substance comprend entre 7 et 13 % en poids de chlorure de calcium, entre 11 et 17 % en poids de chlorure de magnésium et entre 10 et 16 % en poids de formaldéhyde.

Fig.1.

Fig.2.

16

Fig.3.

Fig.4.

Fig.5.